# EUROPÄISCHE PATENTSCHRIFT

(11) **EP 2 308 639 B1**
(45) Veröffentlichungstag und Bekanntmachung des Hinweises auf die Patenterteilung: **05.09.2012**
(21) Anmeldenummer: 10009902.7
(22) Anmeldetag: 20.09.2010
(51) Int. Cl.: B23Q 11/10, B24B 55/02, B23F 5/04, B23F 17/00

(54) **Hartfeinbearbeitungsmaschine zum Hartfeinbearbeiten eines Werkstuecks**
Precision grinding machine for precision grinding of a workpiece
Machine de traitement dur et fin pour le traitement dur et fin d'une pièce usinée

(30) Priorität: 01.10.2009 DE 102009043678
(43) Veröffentlichungstag der Anmeldung: 13.04.2011
(73) Patentinhaber: Kapp GmbH, 96450 Coburg (DE); NILES Werkzeugmaschinen GmbH, 12681 Berlin (DE)
(72) Erfinder: Dremel, Ralf, 96215 Lichtenfels (DE); Mueller, Frank, 96484 Wiesenfeld (DE); Schenk, Thomas, 96450 Coburg (DE)
(74) Vertreter: Gosdin, Michael

(56) Entgegenhaltungen:
- DE-A1- 4 126 928
- DE-A1-102006 009 547
- US-A- 2 924 873
- US-A- 4 508 274
- US-A- 4 961 289

## Beschreibung

Die Erfindung betrifft eine Hartfeinbearbeitungsmaschine zum Hartfeinbearbeiten eines Werkstücks, die mindestens zwei unterschiedliche Hartfeinbearbeitungswerkzeuge umfasst, die auf einer Werkzeugspindel angeordnet sind, wobei die Werkzeugspindel in Richtung ihrer Achse verschieblich auf einem Werkzeugträger angeordnet ist, der relativ zu einem Maschinenbett translatorisch verschieblich ist, und wobei die Hartfeinbearbeitungsmaschine weiterhin Kühlschmierstoffzuführmittel für die Zuleitung von Kühlschmierstoff zur Bearbeitungsstelle zwischen Werkstück und Hartfeinbearbeitungswerkzeug aufweist.

Eine solche Maschine ist beispielsweise in der US 4 961 289 A offenbart. Derartige Hartfeinbearbeitungsmaschinen werden beispielsweise bei der Zahnradherstellung als Verzahnungsschleifmaschinen eingesetzt. Dabei ist häufig eine Aufteilung des abzuschleifenden Aufmaßes vorgesehen, so dass das Zahnrad zunächst geschruppt und anschließend geschlichtet wird. Für das Schruppen kann eine Schleifschnecke eingesetzt werden, wobei dann das kontinuierliche Wälzschleifen zum Einsatz kommt; das Schlichten kann mit einer Profilschleifscheibe im Profilschleifverfahren erfolgen.

Damit der Schleifprozess einwandfrei durchgeführt werden kann und insbesondere eine thermische Überlastung der Zahnflanke vermieden wird, ist eine zuverlässige Versorgung der Kontaktstelle zwischen Schleifwerkzeug und Werkstück sicherzustellen, was durch die Anordnung von Kühlschmierstoffzuführmittel erfolgt.

Die US 4 508 274 A offenbart eine Kühlschmiermitteldüse mit einstellbarer Weite der Stahlaustrittsöffnung. Andere Lösungen sind aus der US 2 924 873 A, aus der DE 10 2006 009 547 A1 und aus der DE 41 26 928 A 1 bekannt.

Für die beiden oben genannten Verfahren bestehen hinsichtlich einer sicheren Vermeidung thermischer Werkstückschädigungen deutlich unterschiedliche Anforderungen an die Kühlmittelzufuhr:
Beim kontinuierlichen Wälzschleifen wird aufgrund des Zusammenhangs zwischen Schnittgeschwindigkeit und Bearbeitungszeit üblicherweise mit Schnittgeschwindigkeiten, d. h. Umfangsgeschwindigkeiten der Schleifschnecke, von ca. 60 m/s oder mehr gearbeitet. Zur sicheren Vermeidung thermischer Schädigungen der Wcrkstückrandzone ist eine möglichst geringe Differenz zwischen Umfangsgeschwindigkeit der Schleifschnecke und der Austrittsgeschwindigkeit des Kühlmittelstrahles anzustreben, d. h. eine relativ hohe Austrittsgeschwindigkeit des Kühlschmierstoffs aus der Kühlschmierstoffdüse ist erforderlich. Diese hohe Geschwindigkeit wird durch einen kleinen Düsenaustrittsquerschnitt und einen hohen Versorgungsdruck erzeugt. Unter diesen Bedingungen stellt sich ein relativ geringer Volumenstrom ein, der sich jedoch nicht negativ auf den Schleifprozess oder die erzeugte Werkstückqualität auswirkt.

Beim Profilschleifen wird dagegen üblicherweise mit niedrigeren Schnittgeschwindigkeiten zwischen 25 und 35 m/s gearbeitet. Dieses Verfahren erfordert eine sichere Abdeckung des gesamten Schleifscheibenprofils durch den Kühlmittelstrahl. In Abhängigkeit von der jeweiligen Profilbreite und -höhe ergibt sich daraus die Forderung nach einem relativ großen Düsenaustrittsquerschnitt, wobei sich ein Kühlmittelstrahl mit geringer Austrittsgeschwindigkeit und niedrigem Druck, aber relativ hohem Volumenstrom einstellt.

Neben dem genannten speziellen Anwendungsfall der Hartfeinbearbeitung von Verzahnungen sind weitere allgemeine Fälle denkbar, in denen mehrere Werkzeuge mit deutlich unterschiedlichen Anforderungen an die Kühlmittelzufuhr nacheinander zum Einsatz kommen.

Nach einer üblichen Fertigungsmethode sind im Falle mehrerer Werkzeuge diese in Achsrichtung fluchtend auf einem Werkzeugdorn angeordnet, der zwischen einem Spindelmotor und einem Gegenlager eingespannt ist. Die gesamte Einheit bestehend aus Spindelmotor, Gegenlager, Werkzeugdorn und Werkzeugen ist auf einem in Achsrichtung der Werkzeuge beweglichen Schlitten (Werkzeugträger) angeordnet (zumeist als Y-Achse bezeichnet), mit dem die Werkzeuge in die für die Bearbeitung notwendige axiale Position relativ zum Werkstück gebracht werden.

Die zum Wälzschleifen eingesetzten schneckenförmigen Werkzeuge sind üblicherweise deutlich breiter als die reine Eingriffsbreite, die sich durch den Eingriff von Werkzeug und Werkstück ergibt. Dies hat den Zweck, diverse Shiftmethoden anwenden zu können, um die Zahnräder in spezieller Weise zu schleifen: Eingesetzt wird zunächst das diskontinuierliche Shiften in Werkzeugachsrichtung (Y-Achse) zwischen Schruppen und Schlichten bzw. zwischen der Bearbeitung einzelner Werkstücke, um neue, unverbrauchte Schneckenbereiche in Eingriff zu bringen. Beim kontinuierlichen Shiften in Werkzeugachsrichtung (Y-Achse) während der Schleifbearbeitung eines Werkstücks (auch als Diagonalschleifen bezeichnet) kann eine gezielte Beeinflussung der Zahnflankentopologie und/oder -Oberflächenstruktur erfolgen.

Die hier verwendeten Kühlmitteldüsen können starr ausgeführt sein, d. h. für einen bestimmten, nicht veränderlichen Werkstückdurchmesser optimiert sein, was sich insbesondere für nicht abrichtbare CBN-Schleifwerkzeuge empfiehlt, deren Durchmesser sich nicht. ändert. Im Falle von Werkzeugen mit veränderlichem Durchmesser, d. h. namentlich für abrichtbare Schleifwerkzeuge, können die Kühlmitteldüsen so installiert sein, dass diese in einer Ebene, die senkrecht auf der Achse der Werkzeugspindel steht, beweglich angeordnet sind, so dass die Kühlmitteldüse mit abnehmendem Werkzeugdurchmesser entsprechend nachgeführt werden kann. Die Anpassung der Düsenposition an den aktuellen Werkzeugdurchmesser kann durch eine rotatorische oder durch eine translatorische Bewegung erfolgen.

In den vorbekannten Bearbeitungsfällen wird das Werkstück entweder nur mit einem einzigen Werkzeug bearbeitet (z. B. mit einer abrichtbaren Schleifschnecke; das Schruppen und das Schlichten erfolgt mit unterschiedlichen Breitenbereichen des gleichen Werkzeugs) oder es kommen zwei Werkzeuge des gleichen Typs und der gleichen Größe zum Einsatz (z. B. abrichtfreies Profilschleifen mit CBN-Schrupp- und -Schlichtscheibe). In diesen Fällen ist die Verwendung einer einzigen Düse - mit für das jeweils angewendete Werkzeug bzw. Bearbeitungsverfahren optimierten Eigenschaften - problemlos möglich.

Eine Kombination mehrerer Werkzeuge bzw. Bearbeitungsvcrfahren unterschiedlicher Art kommt üblicherweise zum Einsatz bei der Bearbeitung mehrerer Verzahnungen des gleichen Werkstücks in einer Aufspannung (z. B. Getriebewellen) oder bei der Bearbeitung einer Verzahnung mit unterschiedlichen Verfahren für das Schruppen und das Schlichten (z. B. Schruppen mit abrichtbarem Wälzschleifen, Schlichten mit abrichtfreiem Profilschleifen - wie eingangs erläutert).

In diesen Fällen sind folgende Varianten der Kühlmittelzufuhr bekannt:
Bekannt ist die Verwendung der gleichen Düse (mit oder ohne der oben genannten Durchmessernachführung) für die unterschiedlichen Werkzeuge. Dies hat den Nachteil, dass die Bedingungen der Kühlmittelzufuhr nicht für jedes verwendete Werkzeug optimiert sein können. Deswegen ist die Bearbeitung für mindestens eines der verwendeten Werkzeuge nur mit reduzierter Vorschubgeschwindigkeit möglich, woraus eine längere Bearbeitungszeit und damit ein Wirtschaftlichkeitsverlust resultieren.

Bekannt ist ferner, dass mehrere Düsen auf dem Schlitten der Y-Achse angeordnet sind, die mit dem Schlitten mitfahren, wobei die Düsen ihre Position relativ zum jeweiligen Werkzeug nicht verändern. Als nachteilig ergibt sich in diesem Falle folgendes: Damit im Falle des Wälzschleifens mit einem schneckenförmigen Werkzeug die oben genannten Shiftverfahren angewendet werden können, muss eine auf dem Schlitten der Y-Achse mitfahrende Düse so breit sein wie das gesamte Werkzeug, d. h. deutlich breiter also, als es aufgrund der effektiven Eingriffsbreite zwischen Werkzeug und Werkstück erforderlich wäre. Bei konstanter Austrittshöhe der Düsenöffnung vergrößert sich durch die Verbreiterung der Düse aber auch der Düsenquerschnitt, was im Widerspruch zu den für das Wälzschleifen als optimal geltenden Bedingungen steht. Auch in diesem Fall kann die Bearbeitung aufgrund der nicht optimalen Bedingungen der Kühlmittelzufuhr nur mit reduzierter Vorschubgeschwindigkeit und damit mit längeren Bearbeitungszeiten und daher mit reduzierter Wirtschaftlichkeit durchgerührt werden.

Der Erfindung liegt daher die **Aufgabe** zugrunde, eine Hartfeinbearbeitungsmaschine der eingangs genannten Art so hinsichtlich der Kühlschmierstoffzuführmittel auszubilden, dass die oben genannten Nachteile vermieden werden und dass die Anwendung aller denkbaren Werkzeug- und Verfahrenskombinationen unter optimalen Kühlschmierstoff-Versorgungsbedingungen stattfinden können. Für jeden Werkzeugtyp und für jedes Bearbeitungsverfahren sollen jeweils die als optimal geltenden Bedingungen der Kühlmittelzufuhr eingestellt werden können. Weiterhin soll eine automatische Anpassung der Bedingungen der Kühlmittelzufuhr an das jeweils eingesetzte Werkzeug bzw. Bearbeitungsverfahren innerhalb eines Bearbeitungszyklus ohne Bedienereingriff möglich sein, d. h. ausgelöst durch die Maschinensteuerung.

Die **Lösung** dieser Aufgabe durch die Erfindung ist dadurch gekennzeichnet, dass die Kühlschmierstoffzuführmittel mindestens ein Düsenelement umfassen, wobei das Düsenelement eine Düsenkammer aufweist, die durch mindestens zwei sich gegenüber liegende Wandelemente begrenzt wird und die eine Strahlaustrittsöffnung für den Kühtschmierstoff definieren, wobei mindestens eines der Wandelemente zur Veränderung der Strahlaustrittsöffnung beweglich angeordnet ist, wobei entweder ein Wandelement am Düsenelement um eine Achse verschwenkbar angeordnet ist, die parallel zur Achse der Werkzeugspindel ausgerichtet ist, oder ein Teil des Wandelements am Düsenelement in eine Richtung translatorisch verschiebbar angeordnet ist, die in der Ebene eines eben ausgebildeten Teils des Wandelements liegt, wobei das verschwenkbare Wandelement oder der translatorisch verschiebbare Teil des Wandelements in einer Ruheposition gehalten wird und wobei das verschwenkbare Wandelement oder der translatorisch verschiebbare Teil des Wandelements durch den strömenden Kühlschmierstoff aus der Ruheposition bewegt werden kann.

Das verschwenkbare Wandelement oder der translatorisch verschiebbare Teil des Wandelements werden also ohne Bewegungselement auskommend in einer Ruheposition gehalten, wobei das verschwenkbare Wandelement oder der translatorisch verschiebbare Teil des Wandelements durch den strömenden Kühlschmierstoff aus der Ruheposition bewegt werden kann. Das verschwenkbare Wandelement oder der translatorisch verschiebbare Teil des Wandelements kann dabei fortbildungsgemäß durch ein elastisches Element in der Ruheposition gehalten werden. Das elastische Element kann beispielsweise eine Feder sein. Das verschwenkbare Wandelement oder der translatorisch verschiebbare Teil des Wandelements kann durch das elastische Element gegen einen Anschlag vorgespannt werden. Damit ist es möglich, alleine durch Wahl des Drucks bzw. des Volumenstroms in dem bzw. durch das Düsenelement die Strahlaustrittsöffnung zu beeinflussen.

Als Weiterbildung dieses Konzepts kann auch vorgesehen werden, dass bei der Verstellung des Wandelements durch den strömenden Kühlschmierstoff anstatt eines elastischen Elements ein (pneumatisches, hydraulisches oder elektrisches) Bewegungsmittel eingesetzt wird, um das bewegliche Wandelement in seiner Ruheposition zu halten oder wieder dorthin zurück zu bewegen. Das Bewegungsmittel muss nur einfach wirkend sein, d. h. entweder nur öffnen oder nur schließen können.

Das Düsenelement kann in einer Ebene beweglich angeordnet sein, die senkrecht auf der Achse der Werkzeugspindel steht. Hierdurch kann das Düsenelement abrichtbedingten Durchmesserveränderungen des Werkzeugs nachgeführt werden, um so stets die optimale Stellung des Düsenelements sicherzustellen. Das Düsenelement kann dabei um eine Achse verschwenkbar angeordnet sein, die parallel zur Achse der Werkzeugspindel angeordnet ist. Es kann auch translatorisch in der Ebene beweglich angeordnet sein, die senkrecht auf der Achse der Werkzeugspindel steht.

Das Düsenelement kann in Richtung der Achse der Werkzeugspindel ortsfest an oder auf dem Werkzeugträger angeordnet sein. Es kann in dieser Richtung auch auf einer Linearführung relativ zum Werkzeugträger verschieblich angeordnet sein. Weiterhin ist es möglich, dass das Düsenelement in Richtung der Achse ortsfest an oder auf dem Maschinenbett angeordnet ist. Möglich ist es schließlich auch, dass das Düsenelement in der genannten Richtung auf einer Linearführung relativ zum Maschinenbett verschieblich angeordnet ist.

Die Hartfeinbearbeitungswerkzeuge sind gemäß einer bevorzugten Ausführungsform der Erfindung Zahnradbearbeitungswerkzeuge, insbesondere eine Schleifscheibe oder eine Schleifschnecke.

Vorgeschlagen ist also ein Düsenelement, das bezüglich der Strahlaustrittsöffnung für das Kühlfluid in einfacher Weise einstellbar ausgebildet ist. Das Düsenelement hat bevorzugt eine Verstellmöglichkeit in der Ebene, die senkrecht auf der Achse der Werkzeugspindel steht.

In vorteilhafter Weise kann mit der vorgeschlagenen Lösung die oben gestellte Aufgabe vollumfänglich gelöst werden. Demnach wird erreicht, dass auch beim Einsatz verschiedenster Hartfeinbearbeitungswerkzeuge, insbesondere von Schleifwerkzeugen, die Kühlschmierstoff-Versorgungsbedingungen optimiert werden können. Die Anpassung der Kühlschmierstoffzuführmittel ist in einfacher Weise automatisch über die Maschinensteuerung möglich.

Vorgeschlagen sind also Lösungen zur Kühlmittelzufuhr für Bearbeitungsverfahren, bei denen mehrere Werkzeuge nacheinander in der gleichen Position relativ zu dem zu bearbeitenden Werkstück eingesetzt werden und wobei sich die Anforderungen an die Kühlmittelzufuhr (insbesondere betreffend den Austrittsquerschnitt, die Austrittsgeschwindigkeit, den Volumenstrom und den Druck) in Abhängigkeit der eingesetzten Werkzeuge und Bearbeitungsverfahren deutlich unterscheiden.

In der Zeichnung sind Ausführungsbeispiele der Erfindung dargestellt. Es zeigen:
- Fig. 1: in perspektivischer Ansicht eine Hartfeinbearbeitungsmaschine, ausgebildet als Verzahnungsschleifmaschine, die eine Schleif- scheibe und eine Schleifschnecke als Schleifwerkzeuge aufweist, die von einem Kühlschmierstoffzuführmittel mit Kühlmittel versorgt werden,
- Fig. 2: ein erstes Ausführungsbeispiel der Kühlschmierstoffzuführmittel, gesehen in Richtung Achse der Werkzeugspindel (Y-Achse), ausgestattet mit einem verschwenkbaren Wandelement des Düsenkörpers, und
- Fig. 3: ein zweites Ausführungsbeispiel der Kühlschmierstoffzuführmittel, gesehen in Richtung Achse der Werkzeugspindel (Y-Achse), ausgestattet mit einem translatorisch bewegbaren Wandelement des Düsenkörpers.

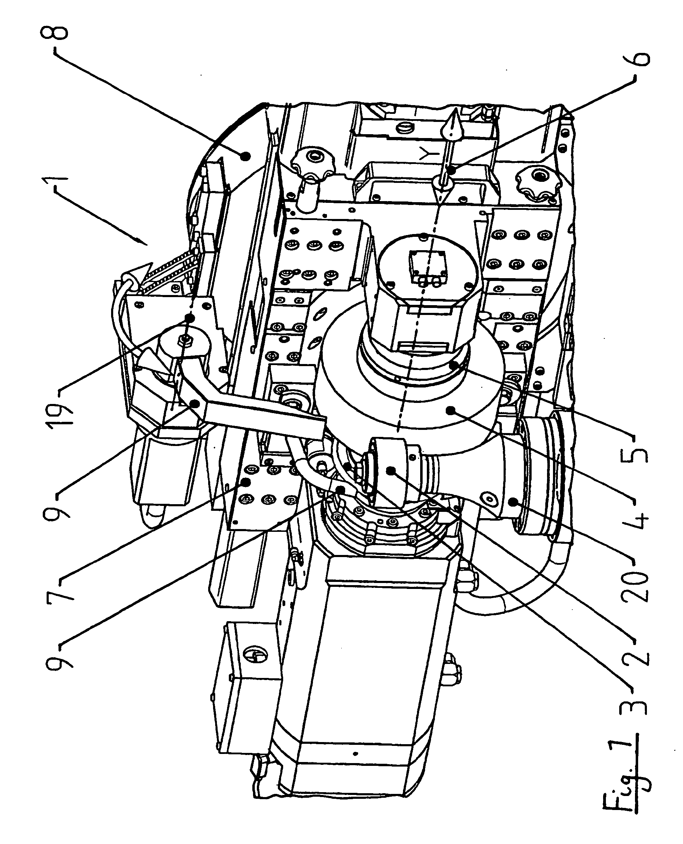

In Fig. 1 ist eine Hartfeinbearbeitungsmaschine 1 in Form einer Verzahnungsschleifmaschine zu sehen, die ein Maschinenbett (Maschinengrundrahmen) 8 aufweist. An diesem ist - unter anderem - ein Werkzeugträger (Schlitten) 7 linear verschieblich angeordnet, der eine Werkzeugspindel 5 trägt. Auf der Werkzeugspindel 5, die als einteilige Spindel ausgeführt sein kann oder die auch aus zwei oder mehreren ggf. auch separat angetriebenen Teilspindeln bestehen kann, sind mindestens zwei Hartfeinbearbeitungswerkzeuge 3, 4 angeordnet, und zwar eine Profilschleifscheibe 3 und eine nur schematisch dargestellte Schleifschnecke 4. Das mit den Werkzeugen 3, 4 zu bearbeitende Werkstück 2 ist auf einer Werkstückspindel 20 gespannt; vorliegend ist die Werkstückachse vertikal ausgerichtet.

Die Werkzeugspindel 5 weist eine Achse 6 auf. In Richtung dieser Achse kann die Werkzeugspindel 5 auf dem Werkzeugträger 7 in die eingetragene Y-Richtung verschoben werden, um die Werkzeuge 3, 4 wahlweise in Eingriff mit dem Werkstück 2 zu bringen. Insoweit entspricht die Verzahnungsschleifmaschine der vorbekannten Bauformen. Die weiteren benötigten Maschinenachsen, die natürlich für die Bearbeitung notwendig sind, werden hier nicht weiter thematisiert, da sie für die Erfindung nicht relevant sind.

Wesentlich ist nunmehr das Kühlschmierstoffzuführmittel 9, das für die Zuführung von Kühlschmierstoff zur Kontaktstelle zwischen Werkzeug 3, 4 und Werkstück 2 dient.

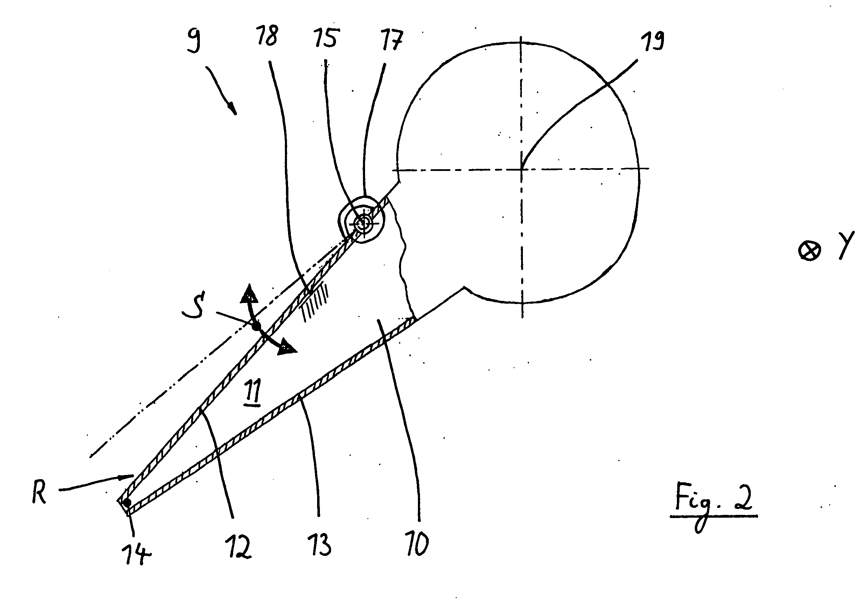

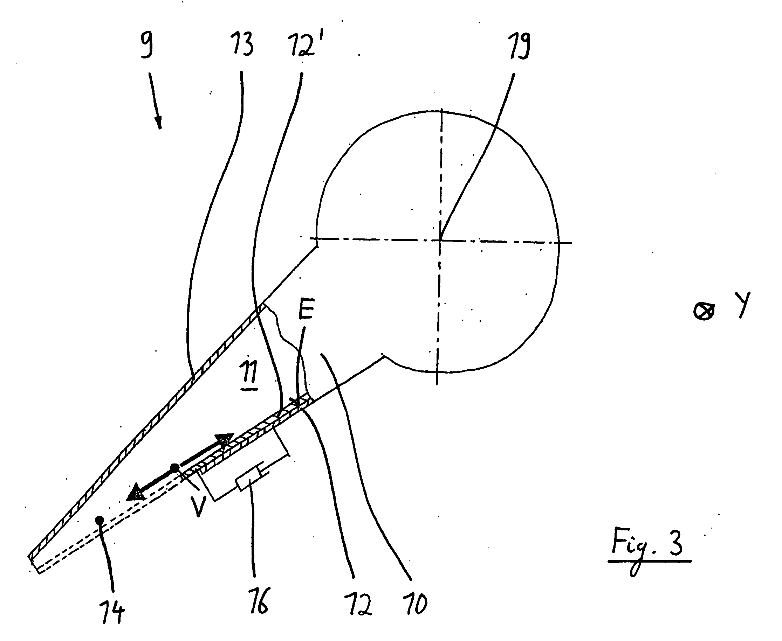

Erfindungsgemäß ist ein Düsenelement 10 vorgesehen, wie es in den beiden Figuren 2 und 3 in Form zweier Ausführungsbeispiele illustriert ist, wobei das Düsenelement 10 eine Düsenkammer 11 aufweist, die durch mindestens zwei sich gegenüber liegende Wandelemente 12 und 13 begrenzt wird. Die beiden Wandelemente 12, 13 definieren eine Strahlaustrittsöffnung 14 für den Kühlschmierstoff. Wesentlich ist dabei, dass mindestens eines der Wandelemente 12, 13 zur Veränderung der Strahlaustrittsöffnung 14 beweglich angeordnet ist.

In Fig. 2 ist vorgesehen, dass das Wandelement 13 starr mit dem Düsenelement 10 verbunden ist. Indes ist das gegenüber liegende Wandelement 12 als ebene Platte ausgebildet, das an einer Achse 15, die parallel zur Y-Achse liegt, gelenkig am Düsenelement 10 gelagert ist. Demgemäß kann das Wandelement 12 um die Achse 15 schwenken, so dass sich die Größe der Strahlaustrittsöffnung 14 entsprechend ändert. Die Verschwenkrichtung ist mit dem Doppelpfeil S markiert.

In diesem Ausführungsbeispiel wird die Schwenkbewegung nicht mit einem separaten Betätigungselement veranlasst. Vielmehr ist an der Achse 15 ein elastisches Element 17 zwischen dem Düsenelement 10 und dem verschwenkbaren Wandelement 12 wirksam. Das elastische Element ist hier als Torsionsfeder ausgeführt und bewirkt, dass das Wandelement 12 ohne Einwirkung äußerer Kräfte in einer Ruhestellung R - wie eingezeichnet - zu liegen kommt. Hierfür ist ein Anschlag 18 vorgesehen, an dem das Wandelement 12 anliegen kann; in der Ruhestellung R ist die spaltförmige Strahlaustrittsöffnung 14 minimal.

Wir nun Kühlschmierstoff durch die Düsenkammer 11 ausgebracht, kann durch die Wahl des Fluiddrucks bzw. des Volumenstroms des Kühlschmierstoffs eine gezielte Kraft auf die Innenseite des Wandelements 12 ausgeübt werden. Abhängig davon, wie groß der Druck bzw. der Volumenstrom gewählt wird, verschwenkt das Wandelement 12 mehr oder weniger gegen die Kraft des elastischen Elements 17 von der Ruhestellung R aus nach außen, bis maximal die mit strichpunktierter Linie eingezeichnete Stellung von dem Wandelement 12 eingenommen wird. Damit hat sich die Spaltgröße der Strahlaustrittsöffnung 14 bis zu ihrem Maximum aufgeweitet.

Der Vorteil der Lösung gemäß Fig. 2 besteht darin, dass die Strahlaustrittsöffnung 14 alleine durch Wahl des Drucks bzw. des Volumenstroms des Kühlschmierstoffs verändert werden kann; ein separates Stellelement ist nicht nötig.

Das Düsenelement 10 kann um die Achse 19 insgesamt verschwenkt werden, um abrichtbedingten Durchmesseränderungen des Schleifwerkzeugs folgen zu können.

In Fig. 3 ist eine alternative nicht erfindungsgemässe Lösung skizziert, bei der die Veränderung der Strahlaustrittsöffnung 14 nicht durch den Druck im Kühlschmierstoff, sondern aktiv durch ein Bewegungsmittel eingestellt wird.

Hier ist das obere, die Düsenkammer 11 begrenzende Wandelement 13 des Düsenelements 10 starr mit dem Grundkörper des Düsenelements verbunden. Ein solches starres Wandelement 12 ist auch im unteren Bereich des Düsenelements 10 vorgesehen. Allerdings weist die untere begrenzende Wandung einen Teil 12' auf, das schieberartig auf dem eben ausgebildeten Wandelement 12 in der hierdurch gebildeten Ebene E in eine Verschieberichtung V gemäß dem eingetragenen Doppelpfeil beweglich ist. In Abhängigkeit der Lage des Teils 12' der Wandelements verändert sich die Größe der Strahlaustrittsöffnung 14. Die Position des Teils 12' wird durch ein Bewegungselement 16 eingestellt, das in Fig. 3 nur sehr schematisch angedeutet ist. Es können pneumatische, hydraulische oder elektrische Betätigungsmittel eingesetzt werden.

Auch hier kann das Düsenelement 10 um die Achse 19 verschwenkt werden, um abrichtbedingten Durchmesseränderungen des Schleifwerkzeugs folgen zu können.

Soweit vorstehend von einer (im Raum absolut) ortsfesten Anordnung der Düse an oder auf dem Maschinenbett die Rede ist, sei hierzu folgendes angemerkt: Auf dem eigentlichen Maschinenbett ist zumeist ein Maschinenständer (beweglich) angeordnet, wobei auf dem Ständer wiederum ein Schwenkteil (beweglich) angeordnet ist. Auf dem Schwenkteil ist dann z. B. ein Schlitten auf einer Linearführung (für die Y-Achse) beweglich angeordnet.

Unter der Angabe einer ortsfesten Anordnung der Düse an oder auf dem Maschinenbett ist zu verstehen, dass die Düse bei bestimmungsgemäßem Gebrauch während des Schleifvorgangs nicht bewegt wird. Dies ist also definitionsgemäß auch dann der Fall, wenn die Düse - wie es zumeist der Fall sein wird - auf dem Schwenkteil befestigt ist und somit nicht direkt, sondern über das Schwenkteil und den Maschinenständer indirekt mit dem Maschinenbett verbunden ist, so dass die Düse allerdings bei der bestimmungsgemäßer Benutzung relativ zum Bett ortsfest angeordnet ist (obwohl sie durch das Schwenkteil und den Ständer relativ zum eigentlichen Maschinenbett bewegt (verstellt) werden kann).

### Bezugszeichenliste:

- 1: Hartfeinbearbeitungsmaschine
- 2: Werkstück
- 3: Hartfeinbearbeitungswerkzeug (Schleifscheibe)
- 4: Hartfeinbearbeitungswerkzeug (Schleifschnecke)
- 5: Werkzeugspindel
- 6: Achse
- 7: Werkzeugträger
- 8: Maschinenbett (Maschinengrundrahmen)
- 9: Kühlschmierstoffzuführmittel
- 10: Düsenelement
- 11: Düsenkammer
- 12: Wandelement
- 12': Teil des Wandelements
- 13: Wandelement
- 14: Strahlaustrittsöffnung
- 15: Achse
- 16: Bewegungsmittel
- 17: elastisches Element
- 18: Anschlag
- 19: Achse
- 20: Werkstückspindel

- Y: Achsrichtung der Werkzeugspindel
- V: Verschieberichtung
- S: Verschwenkrichtung
- E: Ebene
- R: Ruheposition

## Patentansprüche

1. Hartfeinbearbeitungsmaschine (1) zum Hartfeinbearbeiten eines Werkstücks (2), die mindestens zwei unterschiedliche Hartfeinbearbeitungswerkzeuge (3, 4) umfasst, die auf einer Werkzeugspindel (5) angeordnet sind, wobei die Werkzeugspindel (5) in Richtung (Y) ihrer Achse (6) verschieblich auf einem Werkzeugträger (7) angeordnet ist, der relativ zu einem Maschinenbett (8) translatorisch verschieblich ist, und wobei die Hartfeinbearbeitungsmaschine (1) weiterhin Kühlschmierstoffzuführmittel (9) für die Zuleitung von Kühlschmierstoff zur Bearbeitungsstelle zwischen Werkstück (2) und Hartfeinbearbeitungswerkzeug (3, 4) aufweist,
**dadurch gekennzeichnet,**
**dass** die Kühlschmierstoffzuführmittel (9) mindestens ein Düsenelement (10) umfassen, wobei das Düsenelement (10) eine Düsenkammer (11) aufweist, die durch mindestens zwei sich gegenüber liegende Wandelemente (12, 13) begrenzt wird und die eine Strahlaustrittsöffnung (14) für den Kühlschmierstoff definieren, wobei mindestens eines der Wandelemente (12, 13) zur Veränderung der Strahlaustrittsöffnung (14) beweglich angeordnet ist,
wobei entweder ein Wandelement (12) am Düsenelement (10) um eine Achse (15) verschwenkbar (S) angeordnet ist, die parallel zur Achse (6) der Werkzeugspindel (5) ausgerichtet ist, oder ein Teil (12') des Wandelements (12) am Düsenelement (10) in eine Richtung (V) translatorisch verschiebbar angeordnet ist, die in der Ebene (E) eines eben ausgebildeten Teils des Wandelements (12) liegt,
wobei das verschwenkbare Wandelement (12) oder der translatorisch verschiebbare Teil (12') des Wandelements (12) in einer Ruheposition (R) gehalten wird und
wobei das verschwenkbare Wandelement (12) oder der translatorisch verschiebbare Teil (12`) des Wandelements (12) durch den strömenden Kühlschmierstoff aus der Ruheposition (R) bewegt werden kann.

2. Hartfeinbearbeitungsmaschine nach Anspruch 1, **dadurch gekennzeichnet, dass** das verschwenkbare Wandelement (12) oder der translatorisch verschiebbare Teil (12') des Wandelements (12) durch ein elastisches Element (17) in der Ruheposition (R) gehalten wird.

3. Hartfeinbearbeitungsmaschine nach Anspruch 2, **dadurch gekennzeichnet, dass** das verschwenkbare Wandelement (12) oder der translatorisch verschiebbare Teil (12`) des Wandelements (12) durch das elastische Element (17) gegen einen Anschlag (18) vorgespannt wird.

4. Hartfeinbearbeitungsmaschine nach einem der Ansprüche 1 bis 3, **dadurch gekennzeichnet, dass** das Düsenelement (10) in einer Ebene beweglich angeordnet ist, die senkrecht auf der Achse (6) der Werkzeugspindel (5) steht.

5. Hartfeinbearbeitungsmaschine nach Anspruch 4, **dadurch gekennzeichnet, dass** das Düsenelement (10) um eine Achse (19) verschwenkbar angeordnet ist, die parallel zur Achse (6) der Werkzeugspindel (5) angeordnet ist.

6. Hartfeinbearbeitungsmaschine nach Anspruch 4, **dadurch gekennzeichnet, dass** das Düsenelement (10) translatorisch in der Ebene beweglich angeordnet ist, die senkrecht auf der Achse (6) der Werkzeugspindel (5) steht.

7. Hartfeinbearbeitungsmaschine nach einem der Ansprüche 1 bis 6, **dadurch gekennzeichnet, dass** das Düsenelement (10) in Richtung (Y) der Achse (6) der Werkzeugspindel (5) ortsfest an oder auf dem Werkzeugträger (7) angeordnet ist.

8. Hartfeinbearbeitungsmaschine nach einem der Ansprüche 1 bis 6, **dadurch gekennzeichnet, dass** das Düsenelement (10) in Richtung (Y) der Achse (6) der Werkzeugspindel (5) auf einer Linearführung relativ zum Werkzeugträger (7) verschieblich angeordnet ist.

9. Hartfeinbearbeitungsmaschine nach einem der Ansprüche 1 bis 6, **dadurch gekennzeichnet, dass** das Düsenelement (10) in Richtung (Y) der Achse (6) der Werkzeugspindel (5) ortsfest an oder auf dem Maschinenbett (8) angeordnet ist.

10. Hartfeinbearbeitungsmaschine nach einem der Ansprüche 1 bis 6, **dadurch gekennzeichnet, dass** das Düsenelement (10) in Richtung (Y) der Achse (6) der Werkzeugspindel (5) auf einer Linearführung relativ zum Maschinenbett (8) verschieblich angeordnet ist.

11. Hartfeinbearbeitungsmaschine nach einem der Ansprüche 1 bis 10, **dadurch gekennzeichnet, dass** die Hartfeinbearbeitungswerkzeuge (3, 4) Zahnradbearbeitungswerkzeuge sind, insbesondere eine Schleifscheibe oder eine Schleifschnecke.

## Claims

1. Hard finish machine (1) for hard finishing of a workpiece (2), comprising at least two different hard finish tools (3, 4) which are arranged on a tool spindle (5), wherein the tool spindle (5) is arranged movable in the direction (Y) of its axis (6) on a tool carrier (7), wherein the tool carrier (7) is translational movable relatively to a machine bed (8) and wherein the hard finish machine furthermore comprises cooling lubricant supplying means (9) for the supply of cooling lubricant to the machining region between the workpiece (2) and the hard finish tool (3, 4),
**characterized in that**
the cooling lubricant supplying means (9) comprise at least one nozzle element (10), wherein the nozzle element (10) comprises a nozzle chamber (11), wherein the nozzle chamber (11) is limited by two facing wall elements (12, 13) which define a stream exit opening (14) for the cooling lubricant, wherein at least one of the wall elements (12, 13) is arranged movable for the variation of the stream exit opening (14),
wherein either a wall element (12) is arranged pivotable (S) around an axis (15) at the nozzle element (10), which axis (15) is parallel to the axis (6) of the tool spindle (5) or a part (12') of the wall element (12) is arranged translational movable in a direction (V) at the nozzle element (10), which direction (V) lies in the plane (E) of a flat part of the wall element (12),
wherein the pivotable wall element (12) or the translational movable part (12') of the wall element (12) is kept in an idle position (R), and
wherein the pivotable wall element (12) or the translational movable part (12') of the wall element (12) can be moved out of the idle position (R) by the flowing cooling lubricant.

2. Hard finish machine according to claim 1, **characterized in that** the pivotable wall element (12) or the translational movable part (12') of the wall element (12) is kept in the idle position (R) by an elastic element (17).

3. Hard finish machine according to claim 2, **characterized in that** the pivotable wall element (12) or the translational movable part (12') of the wall element (12) is biased by the elastic element (17) against a stop (18).

4. Hard finish machine according to one of claims 1 to 3, **characterized in that** the nozzle element (10) is movable arranged in a plane which is perpendicular to the axis (6) of the tool spindle (5).

5. Hard finish machine according to claim 4, **characterized in that** the nozzle element (10) is pivotable around an axis (19) which is parallel to the axis (6) of the tool spindle (5).

6. Hard finish machine according to claim 4, **characterized in that** the nozzle element (10) is translational movable in the plane which is perpendicular to the axis (6) of the tool spindle (5).

7. Hard finish machine according to one of claims 1 to 6, **characterized in that** the nozzle element (10) is arranged stationary in the direction (Y) of the axis (6) of the tool spindle (5) at or on the tool carrier (7).

8. Hard finish machine according to one of claims 1 to 6, **characterized in that** the nozzle element (10) is arranged movable on a linear guide in the direction (Y) of the axis (6) of the tool spindle (5) relatively to the tool carrier (7).

9. Hard finish machine according to one of claims 1 to 6, **characterized in that** the nozzle element (10) is arranged stationary in the direction (Y) of the axis (6) of the tool spindle (5) at or on the machine bed (8).

10. Hard finish machine according to one of claims 1 to 6, **characterized in that** the nozzle element (10) is arranged movable on a linear guide in the direction (Y) of the axis (6) of the tool spindle (5) relatively to the machine bed (8).

11. Hard finish machine according to one of claims 1 to 10, **characterized in that** the hard finish tools (3, 4) are gear machining tools, especially a grinding wheel or a grinding worm.

## Revendications

1. Machine d'usinage dur et fin (1) pour l'usinage dur et fin d'une pièce à usiner (2), laquelle machine d'usinage dur et fin comporte au moins deux outils d'usinage dur et fin (3, 4) différents qui sont disposés sur une broche d'outil (5), la broche d'outil (5) étant disposée sur un porte-outil (7) de manière déplaçable dans la direction (Y) de son axe (6), lequel porte-outil peut se déplacer en translation par rapport à un banc de machine (8), et la machine d'usinage dur et fin (1) comprenant en outre des moyens d'acheminement de lubrifiant de refroidissement (9) pour amener du lubrifiant de refroidissement jusqu'au point d'usinage entre la pièce à usiner (2) et l'outil d'usinage dur et fin (3, 4), **caractérisée en ce que**
les moyens d'acheminement de lubrifiant de refroidissement (9) comportent au moins un élément de buse (10), l'élément de buse (10) possédant une chambre de buse (11) qui est délimitée par au moins deux éléments de paroi (12, 13) opposés qui définissent un orifice de sortie de jet (14) pour le lubrifiant de refroidissement, au moins l'un des éléments de paroi (12, 13) étant disposé de manière mobile en vue de la modification de l'orifice de sortie de jet (14),
soit un élément de paroi (12) étant disposé sur l'élément de buse (10) de manière à pouvoir pivoter (S) autour d'un axe (15) qui est orienté parallèlement à l'axe (6) de la broche d'outil (5), soit une partie (12') de l'élément de paroi (12) étant disposée sur l'élément de buse (10) de manière déplaçable en translation dans une direction (V) qui se situe dans le plan (E) d'une partie, réalisée de manière plane, de l'élément de paroi (12),
l'élément de paroi pivotant (12) ou la partie déplaçable en translation (12') de l'élément de paroi (12) étant maintenu(e) dans une position de repos (R) et
l'élément de paroi pivotant (12) ou la partie déplaçable en translation (12') de l'élément de paroi (12) pouvant être déplacé(e) hors de la position de repos (R) par le lubrifiant de refroidissement s'écoulant.

2. Machine d'usinage dur et fin selon la revendication 1, **caractérisée en ce que** l'élément de paroi pivotant (12) ou la partie déplaçable en translation (12') de l'élément de paroi (12) sont maintenus dans la position de repos (R) par un élément élastique (17).

3. Machine d'usinage dur et fin selon la revendication 2, **caractérisée en ce que** l'élément de paroi pivotant (12) ou la partie déplaçable en translation (12') de l'élément de paroi (12) sont précontraints contre une butée (18) par l'élément élastique (17).

4. Machine d'usinage dur et fin selon l'une quelconque des revendications 1 à 3, **caracterisée en ce que** l'élément de buse (10) est disposé de manière mobile dans un plan qui est perpendiculaire à l'axe (6) de la broche d'outil (5).

5. Machine d'usinage dur et fin selon la revendication 4, **caractérisée en ce que** l'élément de buse (10) est disposé de manière à pouvoir pivoter autour d'un axe (19) qui est disposé parallèlement à l'axe (6) de la broche d'outil (5) .

6. Machine d'usinage dur et fin selon la revendication 4, **caractérisée en ce que** l'élément de buse (10) est disposé de manière mobile en translation dans le plan qui est perpendiculaire à l'axe (6) de la broche d'outil (5).

7. Machine d'usinage dur et fin selon l'une quelconque des revendications 1 à 6, **caractérisée en ce que** l'élément de buse (10) est disposé de manière fixe contre ou sur le porte-outil (7) dans la direction (Y) de l'axe (6) de la broche d'outil (5) .

8. Machine d'usinage dur et fin selon l'une quelconque des revendications 1 à 6, **caractérisée en ce que** l'élément de buse (10) est disposé sur un guidage linéaire de manière déplaçable par rapport au porte-outil (7) dans la direction (Y) de l'axe (6) de la broche d'outil (5).

9. Machine d'usinage dur et fin selon l'une quelconque des revendications 1 à 6, **caractérisée en ce que** l'élément de buse (10) est disposé de manière fixe contre ou sur le banc de machine (8) dans la direction (Y) de l'axe (6) de la broche d'outil (5).

10. Machine d'usinage dur et fin selon l'une quelconque des revendications 1 à 6, **caractérisée en ce que** l'élément de buse (10) est disposé sur un guidage linéaire de manière déplaçable par rapport au banc d'outil (8) dans la direction (Y) de l'axe (6) de la broche d'outil (5).

11. Machine d'usinage dur et fin selon l'une quelconque des revendications 1 à 10, **caractérisée en ce que** les outils d'usinage dur et fin (3, 4) sont des outils d'usinage de roues dentées, en particulier une meule ou une vis sans fin de meulage.
